# EUROPEAN PATENT SPECIFICATION

(11) **EP 1 296 036 B1**
(45) Date of publication and mention of the grant of the patent: **14.02.2007**
(21) Application number: 02021296.5
(22) Date of filing: 19.09.2002
(51) Int. Cl.: F02B 61/02, F02M 35/10, F02B 75/16

(54) **Motorcycle having an internal combustion engine**
Motorfahrrad mit einer Brennkraftmaschine
Motocycle avec un moteur à combustion interne

(30) Priority: 20.09.2001 JP 2001287113; 25.09.2001 JP 2001291760
(43) Date of publication of application: 26.03.2003
(73) Proprietor: YAMAHA HATSUDOKI KABUSHIKI KAISHA, Iwata-shi, Shizuoka-ken (JP)
(72) Inventor: Sugitani, Tsuyoshi, Iwata-shi, Shizuoka-ken (JP)
(74) Representative: Grünecker, Kinkeldey, Stockmair & Schwanhäusser Anwaltssozietät

(56) References cited:
- EP-A- 0 500 139
- EP-A- 1 162 135
- US-A- 4 117 046
- PATENT ABSTRACTS OF JAPAN vol. 009, no. 077 (M-369), 6 April 1985 (1985-04-06) & JP 59 206659 A (SUZUKI JIDOSHA KOGYO KK), 22 November 1984 (1984-11-22)

## Description

The present invention relates to a motorcycle, especially scooter type vehicle, with a vehicle body frame and a swinging type engine unit swingably on said vehicle body frame.

In a compact motorcycle such as scooters, a swinging unit type engine is employed. The swinging unit type engine is constructed in such a manner that a crankcase of the engine and a reducer case are integrally joined with each other to form an engine unit, the reducer is attached with a rear wheel and then swingably mounted on the vehicle body frame via a damper, and the front portion of the engine unit is rotatably mounted on the vehicle body frame via a pivot. Accordingly, the engine unit can be rotated with the rear wheel within a certain angle about a pivot so that it swings with respect to the vehicle body frame to absorb vibrations during travel.

Though a two-cycle engine with a carburetor has been used as such swinging unit type engine for compact motorcycles so far, the use of an internal combustion type four-cycle engine is considered and is now being developed in order to achieve operation controllability with a high degree of precision or improvement of emission of exhaust gas. In order to control injection or ignition of such internal combustion engine according to the state of operation, coolant temperatures, intake-air temperatures, depression at engine intake air manifold, and so on are detected and the detected signals are fed to the engine control unit (ECU). The ECU drives and controls the engine in accordance with a program or a map predetermined based on these detected operating condition signals.

On the other hand, in an automobile engine with a carburetor, an inlet system structure provided with a suction piston in the air intake passage between the carburetor and the air cleaner is known. The suction piston controls the quantity of intake air by reciprocating in the air intake passage based on the depression at engine intake air manifold and varying the cross sectional area of the path, so that an optimal engine performance in accordance with the state of operation may be achieved and leakage of noise toward outside via the air intake passage may be prevented.

The suction piston has a diaphragm chamber including a first chamber and a second chamber partitioned by a diaphragm, and a piston interlocked with the diaphragm for reciprocating in the air intake passage. The first chamber on one side of the diaphragm communicates with the air intake passage via a opening formed at the distal end of the piston inserted into the air intake passage. Since the area of the air intake passage is reduced by the piston, the distal end portion of the piston and the downstream side thereof are in significant depression. Therefore the depression acts on the first chamber through the interior of the piston.

On the other hand, the second chamber on the other side of the diaphragm communicates with the air intake passage on the upstream side of the piston via the communication path. The air intake passage on the upstream side of the piston is connected to the air cleaner, which is substantially in a state of atmosphere. Therefore, substantial atmosphere acts on the second chamber via the communication path. Accordingly, the pressure difference is created between both sides of the diaphragm, and this pressure deference deforms the diaphragm, and thus the piston reciprocates in the air intake passage correspondingly.

On the other hand, in the internal combustion engine, a throttle body provided with a throttle valve is connected to some midpoint of the air intake passage, and the quantity of intake air is controlled by the open-close control of the throttle valve. In such internal combustion engine, control of internal combustion may be made in accordance with the operating conditions with a high degree of accuracy by electronic control or the like, and thus the operating performance and countermeasures against exhaust gas emission are sufficiently secured. Therefore, the suction piston as in the case of the carburetor has not been used in the related art.

However, in the internal combustion engine, it is required to perform a further sensitive fuel control in the wider control area in accordance with the operating conditions to improve the operating performance and exhaust gas emission.

In response to such requirement, provision of a suction piston in the intake system as in the case of carburetor is considered. In this case, in the swinging unit type engine, the throttle body swings as well with the engine. When a relatively large sized suction piston being mounted on the throttle body swings, it places limitations on the layout of components within the swinging area. Especially in the case of motorcycles, the spatial limitations around the engine is significant, and thus compact layout is required for a fuel injector, an intake air pressure sensor, and the like provided together with the suction piston in the inlet system.

It is an objective of the present invention to provide a motorcycle, especially scooter type vehicle, with a vehicle body frame and a swinging type engine unit swingably on said vehicle body frame, said motorcycle has a compact structure.

According to the present invention, said objective is solved by a motorcycle, especially scooter type vehicle, with a vehicle body frame and a swinging type engine unit swingably on said vehicle body frame, said swinging type engine unit comprises an internal combustion engine with a throttle body provided in an air intake passage, a suction piston mounted on said throttle body and projecting therefrom, wherein a fuel injector and an intake air pressure sensor are provided within a range lower than a top of the suction piston projecting from the throttle body.

According to a preferred embodiment of the motorcycle, said air intake passage is located above said swinging type engine unit.

Preferably, said air intake passage is located above a pivot of the swinging motion of the swinging type engine unit.

Preferably, said suction piston is projecting in direction of the swinging motion of the swinging type engine unit and said fuel injector and said intake air pressure sensor are provided within the range lower than the top of the suction piston in the direction of the swinging motion of the swinging type engine unit.

Preferably, said engine comprises a cylinder which is inclined in forward direction of the motorcycle and said air intake passage is routed above said cylinder and said swinging motion of the swinging type engine unit is directed in an upward direction of the motorcycle, wherein said suction piston is projecting upwardly from the throttle body.

According to a preferred embodiment of the motorcycle, said suction piston, said fuel injector and said intake air pressure sensor are facing a frame means and/or a fuel tank and/or a helmet box with regard to the swinging motion of the swinging type engine unit.

Preferably, the fuel injector and the intake air pressure sensor are provided on said throttle body or at the air intake passage.

Preferably, the intake air pressure sensor is mounted on the throttle body at the position adjacent to the suction piston, and the fuel injector is mounted at the air intake passage on a downstream side of a throttle valve of said throttle body.

Preferably, the suction piston is larger than the intake air pressure sensor or the fuel injector, and the top of the suction piston is provided with a flat shaped surface.

Preferably, said air intake passage comprises an intake manifold and an intake pipe and said fuel injector is mounted on said intake pipe.

Hereinafter, the present invention is illustrated and explained by means of preferred embodiments with reference to accompanying drawings. In the drawings wherein:
- Fig. 1: is a outline view of the compact motorcycle according an embodiment;
- Fig. 2: is a side view of a principal portion of the motorcycle shown in Fig. 1;
- Fig. 3: is a plan view of a principal portion of the motorcycle shown in Fig. 1;
- Fig. 4: is a schematic drawing of the engine portion of the motorcycle shown in Fig. 1;
- Fig. 5: shows s a mounting structure of the intake air pressure sensor of the motorcycle shown in Fig. 1;
- Fig. 6: shows a layout structure of the intake air pressure sensor shown in Fig. 6;
- Fig. 7: is a schematic drawing showing the air intake passage according to the embodiment; and
- Fig. 8: is a side view of a principal portion of the (air) inlet system shown in Fig. 1.

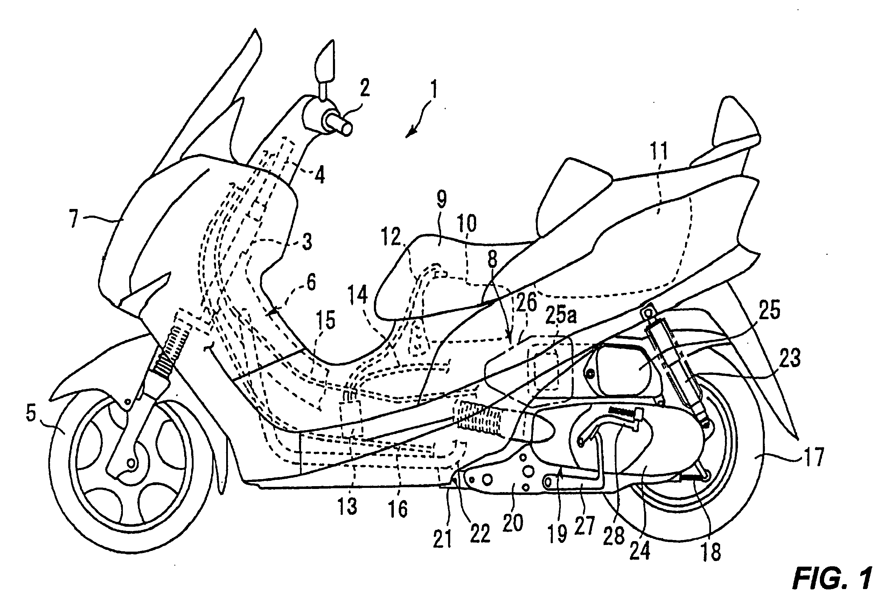

The vehicle body 1 has a handle 2 at the front, and the handle 2 is connected to the front wheel 5 via a steering shaft 4 through which the head pipe 3 is inserted. The vehicle body frame 6 is connected to the head pipe 3. The vehicle body frame 6 forms a frame structure of the entire vehicle body. The front portion of the vehicle body is covered by the cowling 7. The vehicle body 1 is covered by the vehicle body cover 8 from the outside of the vehicle body frame 6. A seat 9 is provided at the center of the vehicle body, and a fuel tank 10 is provided below the seat 9, and a helmet box (storage space) 11 is provided rearwardly thereof. The fuel tank 10 feeds fuel to a fuel injector (not shown in Fig. 1) via a fuel hose (not shown in Fig. 1). An end of a breather hose 12 is connected to the upper portion of the fuel tank 10, and the other end thereof is connected to the canister 13. The canister 13 is connected to the inlet system (for example to the throttle body) via a purge hose 14. A throttle wire 15 is attached to the throttle grip (or a lever) on the right portion of the handle (not shown) and is connected to the throttle valve in the inlet system. A brake cable 16 is attached to the break lever (not shown) on the same handle portion, and is connected to the brake cam shaft 18 on the rear wheel 17.

An engine unit 19 is mounted on the vehicle body frame 6 at the center of the vehicle body. The engine unit 19 includes an engine (not shown in Fig.1), and a reducer (reducing gear) 24 that is integrally joined to its crankcase (not shown). The engine unit 19 is suspended from a lower vehicle body frame member 21 that constitutes a part of the vehicle body frame 6 via an engine bracket 20 so as to be rotatable about a pivot 22. The rear wheel 17 is mounted on the rear portion of the engine unit 19, and the lower end of a damper 23 is rotatably attached also to the rear portion of the engine unit 19. The upper end of the dumper 23 is rotatably mounted on the rear vehicle body frame (not shown in Fig. 1) that constitutes a part of the vehicle frame 6. This allows the engine unit 19 to swing about the pivot 22 together with the rear wheel 17, so that a swing unit type engine is formed.

An air cleaner 25 is provided on the upper side of the reducer 24. The air cleaner 25 is formed with an outside air intake opening 25a on the front portion thereof, and a dust tight cover 26 formed of rubber or resin is provided inside the vehicle body cover 8 so as to cover the opening. The reference numeral 27 designates a stand, and the numeral 28 designates a kick lever.

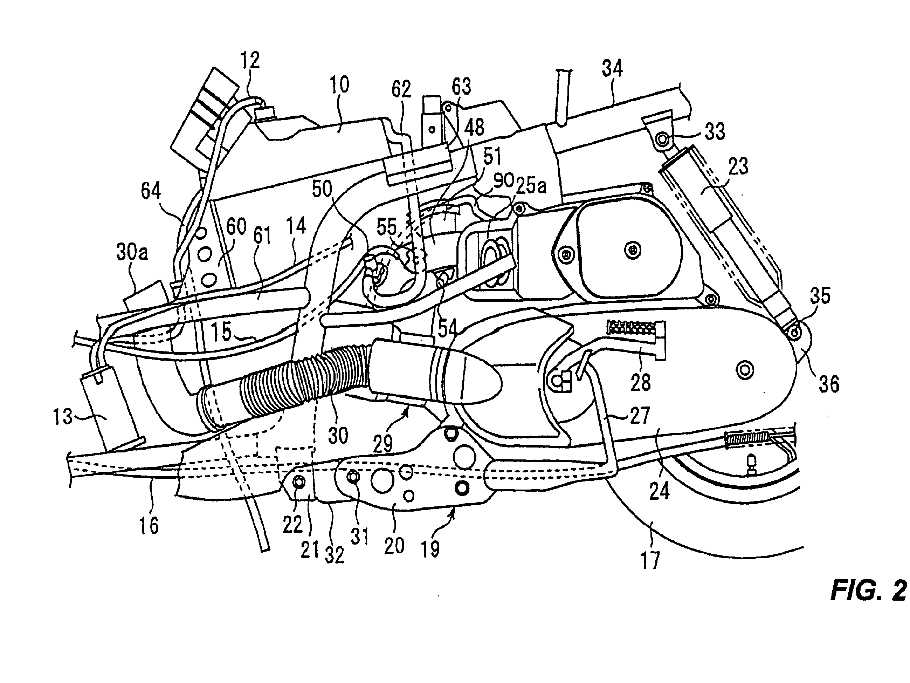

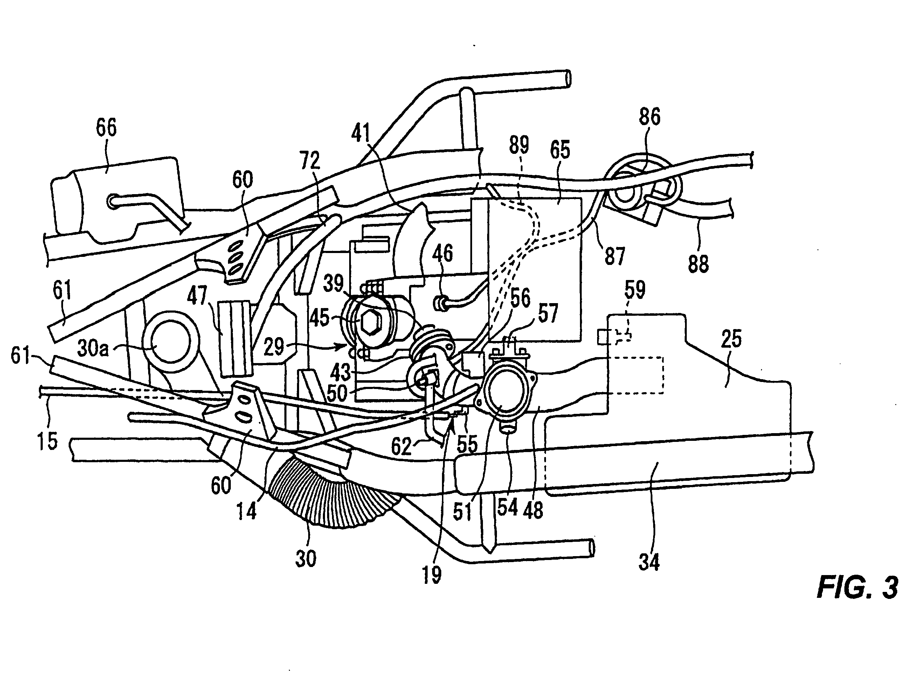

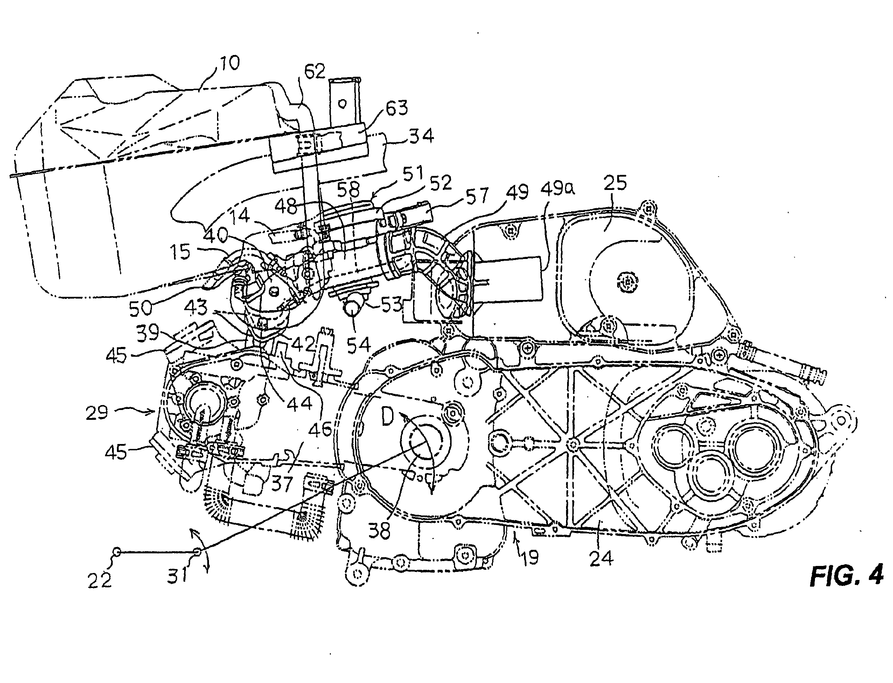

Fig. 2 and Fig. 3 show a side view and a plan view showing a principal portion of the motorcycle provided with the internal combustion engine according to the embodiment respectively. Fig. 4 is an enlarged view of the (air) inlet system thereof.

An engine 29 is provided downwardly of the fuel tank 10. The engine 29 is a four-cycle single cylinder engine provided with a fuel injector. The crankcase (not shown) of the engine 29 is integrally formed with the reducer 24 including, for example, a V-belt stepless speed reducing mechanism, and forms an engine unit 19 of swing unit type engine as a whole. A duct 30 is connected to the front portion of the reducer 24, so that outside air is sucked through the opened end 30a and supplied into the reducer 24 to cool the interior thereof. A rear output shaft (not shown) of the reducer 24 is connected to the axle of the rear wheel 17.

The engine unit 19 of swing unit type is integrally connected at the front portion with an engine bracket 20. A link plate 32 is rotatably mounted on the engine bracket 20 via a shaft 31. The link plate 32 is rotatably mounted on the lower vehicle body frame member 21 via the pivot 22.

The damper (shock absorber) 23 is provided on the rear portion of the engine unit 19. The damper 23 is rotatably mounted at the upper end 33 thereof on the rear vehicle body frame member 34, and at the lower end 35 thereof on the bracket 36 at the rear end of the engine unit 19. Accordingly, the engine unit 19 is rotatably mounted on the vehicle body frame so as to be swingable about the pivot 22 at the front side thereof. As shown in Fig. 4, the cylinder 37 of the engine 29 is inclined toward the front to the extent of being almost horizontal. The crankshaft 38 swings as indicated by the arrow D with the shaft 31 of the engine bracket 20 (Fig. 2) about the aforementioned pivot 22.

The engine 29 is provided with an (air) intake manifold 39 in communication with the air intake port (not shown) of the cylinder head, and a suction pipe 40 (Fig. 3, Fig. 4) connected thereto on the air intake side, and an exhaust pipe 41 (Fig. 3) is connected on the exhaust side thereof. The suction pipe 40 is a pipe in the bent elbow shape, and as shown in Fig. 4, it is fixed via a resin heat insulating material 42 by two bolts 44 with the flanges 43 abutted against each other. The reference numeral 45 is directed to a cover for the maintenance of the dynamic valve cam. A water temperature sensor 46 (Fig. 3, Fig. 4) is provided on the engine 29. The detected output signal of the water temperature sensor 46 is sent to the engine control unit 47 (Fig. 3) via a water temperature signal cable 89 (Fig. 3) and the wire harness 72. The engine control unit 47 is provided with the detected signal cable (not shown) of an intake air temperature sensor and a intake air pressure sensor that will be described later connected thereto via the wire harness 72, so that a throttle valve (not shown in Figs. 1 to 5) is opened and closed based on detected data.

A throttle body 48 is connected to the air intake manifold 39 via the aforementioned bent elbow shaped suction pipe 40. The throttle body 48 is connected to the air cleaner 25 via a joint 49. The fuel injector 50 is connected to the air intake pipe 40.

The throttle body 48 is attached with a throttle valve (not shown in Figs. 1 to 5) therein and with a diaphragm type suction piston 51 on the upstream side thereof. The suction piston 51 is provided with a diaphragm chamber 52 above the throttle body 48 as is described later, and an atmosphere intake port 54 (open-to-atmosphere end) of the atmosphere passage 53 for introducing atmosphere into the diaphragm chamber 52 is provided under the throttle body 48. The valve shaft of the throttle valve is connected with a throttle wire 15 connected to the throttle lever or the throttle grip, or the like, which is not shown, via a link 55.

The air intake opening 25a at the front portion of the air cleaner 25 is covered by a dusttight cover 26 (dashed line in Fig. 1) formed of rubber, resin, and so on. A vehicle body cover is mounted on the outside of the dusttight cover 26. The atmosphere intake port 54 of the suction piston 51 opens inside the dusttight cover 26.

The throttle body 48 is provided with a heated wax-type auto choke 56 and with an intake air pressure sensor 57 at the position adjacent of the suction piston 51 (Fig. 3). The auto choke 56 opens and closes a bypass pipe (not shown) for communicating the upstream side and the downstream side of the throttle valve. The intake air pressure sensor 57 communicates with the air intake manifold 39 or an air intake pipe 40 via a vacuum hose 58. An intake air temperature sensor 59 (Fig. 3) is provided in the air cleaner 25.

The intake air pressure sensor 57 may be provided in the vicinity of the air intake manifold. A throttle position sensor (not shown) may be provided on the valve shaft of the throttle valve opposite to the link 55. In this case, the auto choke 56 is provided on the upstream side of the throttle valve to prevent interference with the throttle position sensor.

The fuel tank 10 is fixed at its front lower portion on the left and right vehicle body frame members 61 via the bracket 60. A fuel hose 62 is drawn from the rear of the fuel tank 10 for feeding fuel to the fuel injector 50. The fuel hose 62 is fixed to the rear vehicle body frame member 34 via the stay 63 (Fig. 2, Fig. 4). The reference numeral 64 (Fig. 2) designates a overflow pipe. The reference numeral 65 (Fig. 3) designates a battery, and the numeral 66 (Fig. 3) designates a recovery tank for coolant. As shown in Fig. 3, a secondary air introduction system 86 for purifying exhaust gas is provided in the center of the vehicle body on the right side. The secondary air introduction system 86 communicates with the air intake manifold via the vacuum hose 87, so that the outside air is supplied to a catalyst (not shown) via the air hose 88 in accordance with depression at engine intake air manifold to re-burn exhaust gas.

The air cleaner 25 is connected with a blow-by gas hose 90 as shown in Fig. 2. The blow-by gas hose 90 communicates a cam chain chamber (not shown) that communicates with the crankcase (not shown) of the engine 29 so as to prevent dropout of an oil seal or power loss due to increase of the pressure in the crankcase of the engine or the like. The blow-by gas hose 90 is connected to the clean side of the air cleaner after passing the element, and blow-bay gas is introduced into the combustion chamber again.

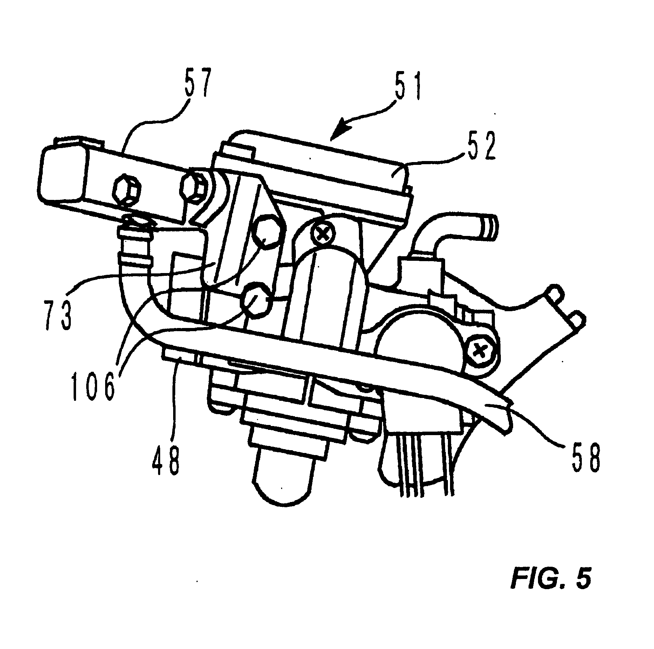

Fig. 5 is a drawing showing the mounting state of the intake air pressure sensor, when viewing the throttle body portion from the right side of the vehicle body.

The intake air pressure sensor 57 is fixed on the throttle body 48 via a bracket 73 with a bolt 106 at the position adjacent to the rear side surface of the diaphragm chamber 52 of the suction piston 51 mounted on the throttle body 48. The intake air pressure sensor 57 communicates with the air intake manifold 39 (or the air intake pipe 40) via the vacuum hose 58.

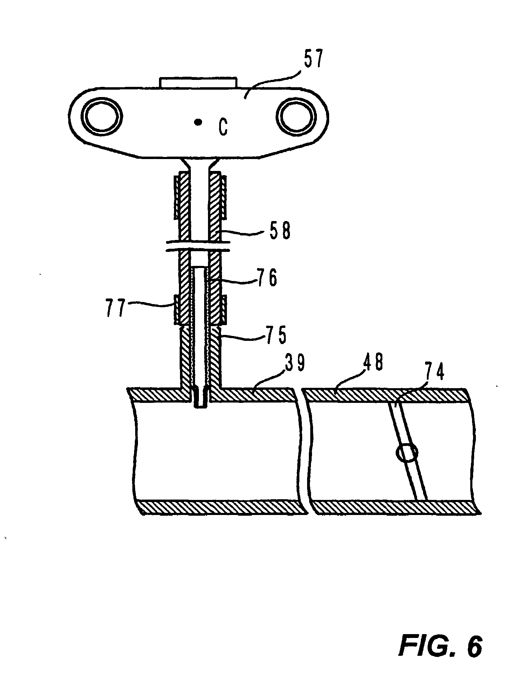

Fig. 6 is a schematic drawing showing the piping of the aforementioned intake air pressure sensor 57.

The throttle body 48 is connected to the upstream side (air cleaner side) of the air intake manifold 39 or of the suction pipe 40. The throttle valve 74 is provided in the throttle body 48. A manifold port 75 is provided on the air intake manifold 39, through which a tapered joint (vacuum pipe) 76 is press fitted. The vacuum hose 58 is attached on the joint 76 and tightened by a band 77.

The vacuum hose 58 is connected so as to open toward the center of detection C of the intake air pressure sensor 57 (for example, the center of detection diaphragm). It allows highly accurate detection of depression at engine intake air manifold.

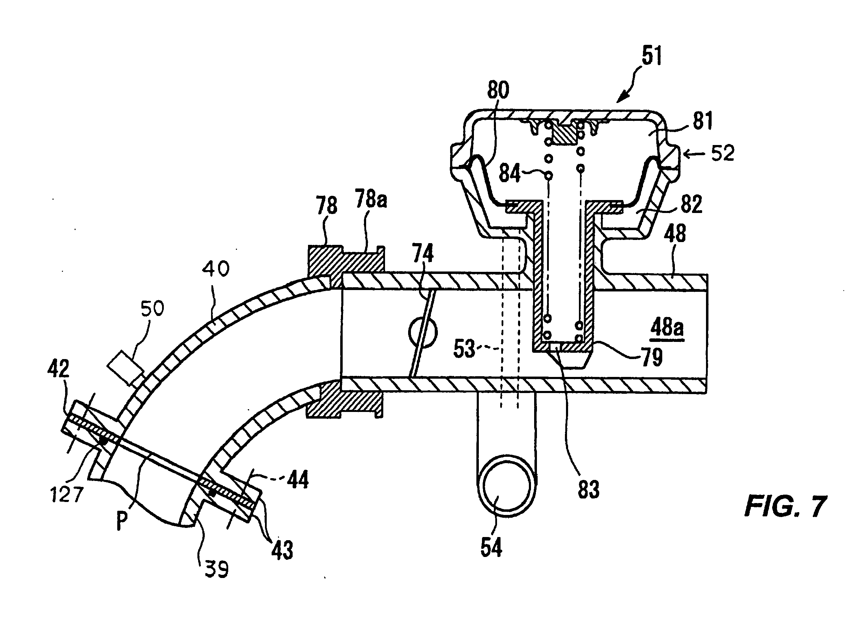

Fig. 7 is a schematic diagram of the air intake passage.

The air intake pipe 40 is connected at its end surface P on the engine side to the air intake manifold 39 formed on the cylinder head of the engine via flanges 43 and heat insulating material 42 with a bolt 44.

The air intake pipe 40 is formed, for example, of aluminum alloy, and is fixed with a rubber joint 78 backed and fixed on the upstream end thereof. The throttle body 48 is press-fitted into the rubber joint 78, and a band (not shown) is fitted on the outer peripheral groove 78a of the rubber joint 78 to tighten up. Connecting the throttle body 48 via the rubber joint 78 allows cutting of vibration from the engine and prevention of leakage of noise from the air cleaner to the outside, as well as reduction of heat effects on the suction piston 51 or throttle valve 74 mounted on the throttle body 48, so that the action with a high degree of accuracy and reliability is achieved.

The suction piston 51 includes a diaphragm chamber 52 formed integrally above the throttle body 48 and a piston 79 to be reciprocated in the air intake passage 48a of the throttle body 48. The diaphragm chamber 52 includes a first chamber (upper chamber) 81 and a second chamber (lower chamber) 82 partitioned by the diaphragm 80. The first chamber 81 passes through the diaphragm 80 and communicates with the interior of the piston 79. A vacuum port 83 is formed at the distal end of the piston 79 to introduce depression at engine intake air manifold into the first chamber 81. A spring 84 is provided between the top surface of the diaphragm chamber 52 and the bottom portion of the piston 79. This spring 84 allows the piston 79 to be urged in the direction to project into the air intake passage 48a of the throttle body 48 (the direction it closes the air intake passage 48a). The depression at engine intake air manifold introduced into the piston 79 acts in the direction to pull up the piston 79 against the spring 84 (the direction it opens the air intake passage 48a).

The second chamber 82 on the lower side of the diaphragm 80 is in communication with the atmosphere passage 53 passing through the outer surface of the throttle body 48. The atmosphere intake port 54 at the end of the atmosphere passage 53 opens at the lower side of the throttle body 48. The atmosphere pressure introduced through the atmosphere intake port 54 acts on the second chamber 82. Therefore, the diaphragm 80 is applied with a force corresponding to the pressure difference between the first chamber 81 and the second chamber 82 on both sides thereof to allow the piston 79 to reciprocate in the opening and closing directions.

The intake air pressure sensor 57 is mounted on the throttle body 48 via the bracket 73 (See Fig. 5) as described above at the position adjacent to the suction piston 51. The intake air pressure sensor 57 communicates with the air intake manifold 39 via the vacuum hose 58 as described above (See Fig. 6). The fuel injector 50 connected to the fuel tank 10 via the fuel hose 62 is attached on the air intake pipe 40. The fuel injector 50 is mounted so as to face toward the air intake passage on the downstream side of the throttle valve 74 in the throttle body 48. Both of the intake air pressure sensor 57 and the fuel injector 50 are provided at the position lower than the top of the suction piston 51.

In the swing unit type engine, provision of the intake air pressure sensor 57 and the fuel injector 50 in the space located at the position lower than the suction piston 51, which is the largest components out of the parts of the inlet system mounted on the throttle body 48, allows for effective storage of the intake air pressure sensor 57 and the fuel injector 50 within the swinging range of the inlet system, in which peripheral parts cannot be disposed, without interference with the surrounding vehicle body frame or other parts even when the inlet system swings. The positions of the intake air pressure sensor 57 and the fuel injector 50 are not limited to those shown in the figure as far as they are lower than the suction piston 51, and they may be mounted at the appropriate positions on the throttle body 48, the air intake pipe 40, and the air intake manifold 39 in accordance with the peripheral parts, the vehicle body frame structure, and the like.

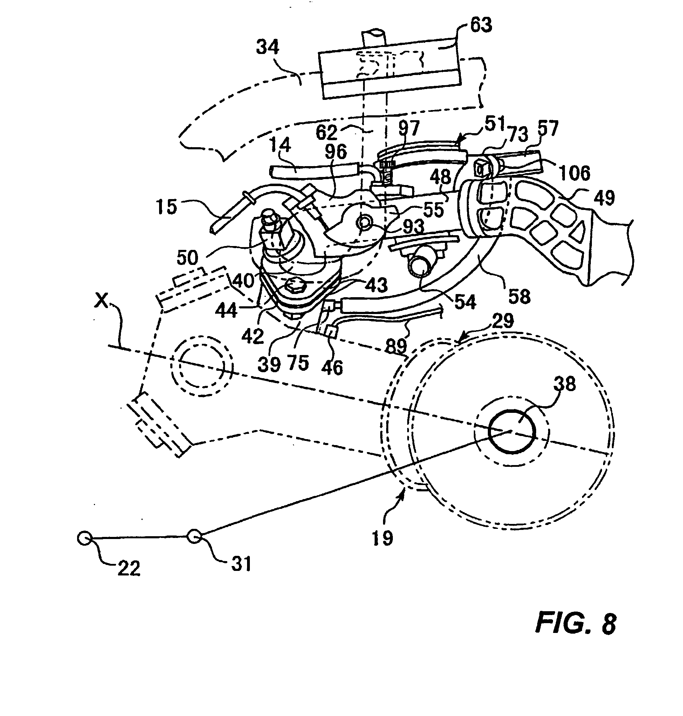

Fig. 8 is a side view of a principal portion of the (air) inlet system of the aforementioned engine.

As described above, the engine unit 19 swings about two axes of the pivot 22 and the shaft 31. The axis X of the cylinder of the engine 29 is inclined toward the front, and the suction pipe 40 and the throttle body 48 are connected to the air intake manifold 39 that communicates with the cylinder head. The suction piston 51 is mounted so as to be project upward from the throttle body 48. The link 55 is fixed on the throttle valve shaft 93 of the throttle body 48. The end of the throttle wire 15 is secured on the bracket 96, and the wire core is fixed to the link 55. This allows the link 55 to rotate the throttle valve shaft 93 to operate the throttle, and thus to open and close the throttle valve (not shown in Fig. 8) fixed on the throttle valve shaft 93. The reference numeral 97 designates an idle adjuster screw.

The intake air pressure sensor 57 is fixed on the throttle body 48 with a bolt 106 via the bracket 73 at the position adjacent to the suction piston 51. The intake air pressure sensor 57 communicates with the air intake manifold 39 via the vacuum hose 58. The fuel injector 50 that communicates with the fuel tank 10 (See Fig. 2) via the fuel hose 62 is mounted on the suction pipe 40.

As described above, both of the intake air pressure sensor 57 and the fuel injector 50 are mounted at the position lower than the top of the suction piston 51. In the swing unit type engine, provision of the intake air pressure sensor 57 and the fuel injector 50 in the space located at the position lower than the suction piston 51, which is the largest components out of the parts of the inlet system mounted on the throttle body 48, allows for effective storage of the intake air pressure sensor 57 and the fuel injector 50 within the swinging range of the inlet system, in which peripheral parts cannot be disposed, without interference with the surrounding vehicle body frame or other parts (for example, the battery 65 shown in Fig. 3, the crossing frame (not shown) for connecting the left and right vehicle body frames 34 behind the battery, the fuel tank, or the like) even when the inlet system swings. There may be the case in which a helmet box (storage space) is disposed at the position of the fuel tank 10. In this case as well, as in the case of the fuel tank, the fuel injector 50 and the intake air pressure sensor 57 can be disposed within the swinging space of the inlet system below the helmet box without interfering with the bottom of the helmet box, other parts, or the like.

As is described thus far, according to the embodiment, since the fuel injector and the intake air pressure sensor are disposed at the position lower than the top of the relatively large sized suction piston, even when they are swung, they are covered in the swinging range of the suction piston, and thus they are not interfere with other components around the engine, and thus the dead space generated by the swinging motion of the engine can effectively utilized to dispose the fuel injector and the intake air pressure sensor.

Accordingly, a layout structure of components of the inlet system of the internal combustion engine is provided in which the components of the inlet system are spatially efficiently arranged in a swing unit type internal combustion engine having with a suction piston on the throttle body that swings together with the engine. In said inlet system of an internal combustion engine including an engine 29 swingably mounted on a vehicle body frame 34 with a rear wheel, a throttle body 48 is provided in the air intake passage located rearward and upward of the pivot of the swinging motion 31 of the engine, and a suction piston 51 is mounted so as to project upwardly of the throttle body, the fuel injector 50 and an intake air pressure sensor 57 are provided on the throttle body 48 or in the air intake passages within the range lower than the top of the suction piston 51.

The layout structure for components of inlet system of internal combustion engine comprises the fuel injector and an intake air pressure sensor provided on the throttle body or in the air intake passage within the range lower than the top of the suction piston in an inlet system of an internal combustion engine including an engine swingably mounted on a vehicle body frame with a rear wheel. A throttle body is provided in the air intake passage located above the center of the swinging motion of the engine and a suction piston mounted so as to project upwardly of the throttle body. Since the fuel injector and the intake air pressure sensor are provided at the position lower than the top of the relatively large sized suction piston, even when they are swung, it is covered in the swinging range of the suction piston, and thus they are not interfere with other components around the engine, and thus the dead space generated by the swinging motion of the engine can effectively utilized to dispose the fuel injector and the intake air pressure sensor.

The intake air pressure sensor is mounted on the throttle body at the position adjacent to the suction piston, and the fuel injector is mounted in the air intake passage on the downstream side of the throttle valve of the throttle body. In this arrangement, the intake air pressure sensor is compactly mounted on the throttle body at the position adjacent to the suction piston, and the fuel injector is compactly mounted, for example, in the vicinity of the air intake manifold on the downstream side of the throttle valve.

The embodiment described above teaches a motorcycle (scooter type vehicle), with a vehicle body frame 6 and a swinging type engine unit 19 swingably on said vehicle body frame 6. Said swinging type engine unit 19 comprises an internal combustion engine with a throttle body 48 provided in an air intake passage, a suction piston 51 mounted on said throttle body 48 and projecting therefrom. A fuel injector 50 and an intake air pressure sensor 57 are provided within a range lower than a top of the suction piston 51 projecting from the throttle body 48.

Said air intake passage is located above said swinging type engine unit 19 of the motorcycle. Said air intake passage is located above a pivot 22 of the swinging motion of the swinging type engine unit 19.

Said suction piston 51 is projecting in direction of the swinging motion of the swinging type engine unit 19 and said fuel injector 50 and said intake air pressure sensor 57 are provided within the range lower than the top of the suction piston 51 in the direction of the swinging motion of the swinging type engine unit 19.

The engine 29 of the motorcycle according to the embodiment comprises a cylinder which is inclined in forward direction of said motorcycle. Said air intake passage is routed above said cylinder and said swinging motion of the swinging type engine unit 19 is directed in an upward direction of the motorcycle. Said suction piston 51 is projecting upwardly from the throttle body 48.

Said suction piston 51, said fuel injector 50 and said intake air pressure sensor 57 are facing a frame means 34 and/or a fuel tank 10 and/or a helmet box 11 with regard to the swinging motion of the swinging type engine unit 19. The fuel injector 50 and the intake air pressure sensor 57 are provided on said throttle body 48 or at the air intake passage. The intake air pressure sensor 57 is mounted on the throttle body 48 at the position adjacent to the suction piston 51. The fuel injector 50 is mounted at the air intake passage on a downstream side of a throttle valve 74 of said throttle body 48. The suction piston 51 is larger than the intake air pressure sensor 57 or the fuel injector 50, and the top of the suction piston 51 is provided with a flat shaped surface. Said air intake passage comprises an intake manifold (39) and an intake pipe (40) and said fuel injector (50) is mounted on said intake pipe (40).

## Claims

1. Motorcycle, especially scooter type vehicle, with a vehicle body frame (6) and a swinging type engine unit (19) swingably on said vehicle body frame (6), said swinging type engine unit (19) comprises an internal combustion engine with a throttle body (48) provided in an air intake passage (39, 40, 48, 49), a suction piston (51) mounted on said throttle body (48) and projecting therefrom, wherein a fuel injector (50) and an intake air pressure sensor (57) are provided within a range lower than a top of the suction piston (51) projecting from the throttle body (48).

2. Motorcycle, especially scooter type vehicle, according to claim 1, wherein said air intake passage (39, 40, 48, 49) is located above said swinging type engine unit (19).

3. Motorcycle, especially scooter type vehicle, according to claim 1 or 2, wherein said air intake passage (39, 40, 48, 49) is located above a pivot (22) of the swinging motion of the swinging type engine unit (19).

4. Motorcycle, especially scooter type vehicle, according to at least one of the claims 1 to 3, wherein said suction piston (51) is projecting in direction of the swinging motion of the swinging type engine unit (19) and said fuel injector (50) and said intake air pressure sensor (57) are provided within the range lower than the top of the suction piston (51) in the direction of the swinging motion of the swinging type engine unit (19).

5. Motorcycle, especially scooter type vehicle, according to at least one of the claims 1 to 4, wherein said engine (29) comprises a cylinder which is inclined in forward direction of the motorcycle and said air intake passage (39, 40, 48, 49) is routed above said cylinder and said swinging motion of the swinging type engine unit (19) is directed in an upward direction of the motorcycle, wherein said suction piston (51) is projecting upwardly from the throttle body (48).

6. Motorcycle, especially scooter type vehicle, according to at least one of the claims 1 to 5, wherein said suction piston (51), said fuel injector (50) and said intake air pressure sensor (57) are facing a frame means (34) and/or a fuel tank (10) and/or a helmet box (11) with regard to the swinging motion of the swinging type engine unit (19).

7. Motorcycle, especially scooter type vehicle, according to at least one of the claims 1 to 6, wherein the fuel injector (50) and the intake air pressure sensor (57) are provided on said throttle body (48) or at the air intake passage (39, 40, 48, 49).

8. Motorcycle, especially scooter type vehicle, according to at least one of the claims 1 to 7, wherein the intake air pressure sensor (57) is mounted on the throttle body (48) at the position adjacent to the suction piston (51), and the fuel injector (50) is mounted at the air intake passage (39, 40, 48, 49) on a downstream side of a throttle valve (74) of said throttle body (48).

9. Motorcycle, especially scooter type vehicle, according to at least one of the claims 1 to 8, wherein the suction piston (51) is larger than the intake air pressure sensor (57) or the fuel injector (50), and the top of the suction piston (51) is provided with a flat-shaped surface.

10. Motorcycle, especially scooter type vehicle, according to at least one of the claims 1 to 9, wherein said air intake passage (39, 40, 48, 49) comprises an intake manifold (39) and an intake pipe (40) and said fuel injector (50) is mounted on said intake pipe (40).

## Patentansprüche

1. Motorrad, insbesondere Motorrollerfahrzeug, mit einem Fahrzeugkörperrahmen (6) und einer schwingenden Motoreinheit (19), die an dem Fahrzeugkörperrahmen (6) schwingen kann, wobei die schwingende Motoreinheit (19) einen Verbrennungsmotor mit einem Drosselkappengehäuse (48), das in einem Lufteinlasskanal (39, 40, 48, 49) vorhanden ist, einen Saugkolben (51), der an dem Drosselklappengehäuse (48) angebracht ist und von ihm vorsteht, umfasst und ein Kraftstoffeinspritzventil (50) sowie ein Einlass-Drucksensor (57) in einem Bereich unter einem oberen Ende des Saugkolbens (51) vorhanden sind, der von dem Drosselklappengehäuse (48) vorsteht.

2. Motorrad, insbesondere Motorrollerfahrzeug, nach Anspruch 1, wobei sich der Einlassluftkanal (39, 40, 48, 49) oberhalb der Feder-Motoreinheit (19) befindet.

3. Motorrad, insbesondere Motorrollerfahrzeug, nach Anspruch 1 oder 2, wobei sich der Lufteinlasskanal (39, 40, 48, 49) oberhalb einer Drehachse (22) der schwingenden Bewegung der schwingenden Motoreinheit (19) befindet.

4. Motorrad, insbesondere Motorrollerfahrzeug, nach wenigstens einem der Ansprüche 1 bis 3, wobei der Saugkolben (51) in eine Richtung der schwingenden Bewegung der schwingenden Motoreinheit (19) vorsteht und das Kraftstoffeinspritzventil (50) sowie der Einlassluft-Drucksensor (57) in dem Bereich vorhanden sind, der tiefer liegt als die Oberseite des Saugkolbens (51) in der Richtung der schwingenden Bewegung der schwingenden Motoreinheit (19).

5. Motorrad, insbesondere Motorrollerfahrzeug, nach wenigstens einem der Ansprüche 1 bis 4, wobei der Motor (29) einen Zylinder umfasst, der in Vorwärtsrichtung des Motorrades geneigt ist, der Lufteinlasskanal (39, 40, 48, 49) oberhalb des Zylinders verläuft, die schwingende Bewegung der schwingenden Motoreinheit (19) in einer Aufwärtsrichtung des Motorrades gerichtet ist und der Saugkolben (51) von dem Drosselklappengehäuse (48) nach oben vorsteht.

6. Motorrad, insbesondere Motorrollerfahrzeug, nach wenigstens einem der Ansprüche 1 bis 5, wobei der Saugkolben (51), das Kraftstoffeinspritzventil (50) und der Einlassluft-Drucksensor (57) einer Rahmeneinrichtung (34) und/oder einem Kraftstofftank (10) und/oder einem Helmfach (11) in Bezug auf die schwingende Bewegung der schwingenden Motoreinheit (19) zugewandt ist.

7. Motorrad, insbesondere Motorrollerfahrzeug, nach wenigstens einem der Ansprüche 1 bis 6, wobei das Kraftstoffeinspritzventil (50) und der Einlassluft-Drucksensor (57) an dem Drosselklappengehäuse (48) oder an dem Lufteinlasskanal (39, 40, 48, 49) vorhanden sind.

8. Motorrad, insbesondere Motorrollerfahrzeug, nach wenigstens einem der Ansprüche 1 bis 7, wobei der Einlassluft-Drucksensor (57) an dem Drosselklappengehäuse (48) an der Position an den Saugkolben (51) angrenzend angebracht ist und das Kraftstoffeinspritzventil (50) an dem Luftansaugkanal (39, 40, 48, 49) an einer stromabliegenden Seite eines Drosselventils (74) des Drosselklappengehäuses (48) angebracht ist.

9. Motorrad, insbesondere Motorrollerfahrzeug, nach wenigstens einem der Ansprüche 1 bis 8, wobei der Saugkolben (51) größer ist als der Einlassluft-Drucksensor (57) oder das Kraftstoffeinspritz-Ventil (50) und die Oberseite des Saugkolbens (51) mit einer plan geformten Fläche versehen ist.

10. Motorrad, insbesondere Motorrollerfahrzeug, nach wenigstens einem der Ansprüche 1 bis 9, wobei der Lufteinlasskanal (39, 40, 48, 49) einen Einlassverteiler (39) und ein Einlassrohr (40) umfasst und das Kraftstoffeinspritzventil (50) an dem Einlassrohr (40) angebracht ist.

## Revendications

1. Motocycle, en particulier véhicule de type scooter, comprenant un cadre de corps de véhicule (6) et une unité motrice de type oscillant (19) montée en oscillation sur ledit cadre de corps de véhicule (6), ladite unité motrice de type oscillant (19) comprenant un moteur à combustion interne comportant un corps de papillon des gaz (48) disposé dans un passage d'admission d'air (39, 40, 48, 49), un piston d'aspiration (51) monté sur ledit corps de papillon des gaz (48) et en saillie à partir de celui-ci, dans lequel un injecteur de carburant (50) et un capteur de pression d'air à l'admission (57) sont disposés dans une plage plus basse que le sommet du piston d'aspiration (51) en saillie à partir du corps de papillon des gaz (48).

2. Motocycle, en particulier véhicule de type scooter, selon la revendication 1, dans lequel ledit passage d'admission d'air (39, 40, 48, 49) est disposé au-dessus de ladite unité motrice de type oscillant (19).

3. Motocycle, en particulier véhicule de type scooter, selon la revendication 1 ou la revendication 2, dans lequel ledit passage d'admission d'air (39, 40, 48, 49) est disposé au-dessus d'un axe de pivotement (22) du mouvement oscillant de l'unité motrice de type oscillant (19).

4. Motocycle, en particulier véhicule de type scooter, selon au moins l'une quelconque des revendications 1 à 3, dans lequel ledit piston d'aspiration (51) est en saillie dans la direction du mouvement oscillant de l'unité motrice de type oscillant (19), et ledit injecteur de carburant (50) et ledit capteur de pression d'air à l'admission (57) sont disposés dans une plage plus basse que le sommet du piston d'aspiration (51) dans la direction du mouvement oscillant de l'unité motrice de type oscillant (19).

5. Motocycle, en particulier véhicule de type scooter, selon au moins l'une quelconque des revendications 1 à 4, dans lequel ledit moteur (29) comprend un cylindre qui est incliné dans une direction avant du motocycle et dans lequel ledit passage d'admission d'air (39, 40, 48, 49) est disposé au-dessus dudit cylindre et ledit mouvement oscillant de l'unité motrice de type oscillant (19) est dirigée dans une direction vers le haut du motocycle, dans lequel ledit piston d'aspiration (51) est en saillie vers le haut à partir du corps de papillon des gaz (48).

6. Motocycle, en particulier véhicule de type scooter, selon au moins l'une quelconque des revendications 1 à 5, dans lequel ledit piston d'aspiration (51), ledit injecteur de carburant (50) et ledit capteur de pression d'air à l'admission (57) font face à des moyens de cadre (34) et / ou à un réservoir de carburant (10) et / ou à un coffre pour casque (11) par rapport au mouvement oscillant de l'unité motrice de type oscillant (19).

7. Motocycle, en particulier véhicule de type scooter, selon au moins l'une quelconque des revendications 1 à 6, dans lequel l'injecteur de carburant (50) et le capteur de pression d'air à l'admission (57) sont disposés sur ledit corps de papillon des gaz (48) ou sur le passage d'admission d'air (39, 40, 48, 49).

8. Motocycle, en particulier véhicule de type scooter, selon au moins l'une quelconque des revendications 1 à 7, dans lequel le capteur de pression d'air à l'admission (57) est monté sur le corps de papillon des gaz (48) dans une position située à proximité du piston d'aspiration (51), et l'injecteur de carburant (50) est monté sur le passage d'admission d'air (39, 40, 48, 49) sur un côté aval d'un papillon des gaz (74) dudit corps de papillon des gaz (48).

9. Motocycle, en particulier véhicule de type scooter, selon au moins l'une quelconque des revendications 1 à 8, dans lequel le piston d'aspiration (51) est plus grand que le capteur de pression d'air à l'admission (57) ou que l'injecteur de carburant (50), et dans lequel le sommet du piston d'aspiration (51) a une surface plane.

10. Motocycle, en particulier véhicule de type scooter, selon au moins l'une quelconque des revendications 1 à 9, dans lequel ledit passage d'admission d'air (39, 40, 48, 49) comprend un collecteur d'admission (39) et une tubulure d'admission (40), et ledit injecteur de carburant (50) est monté sur ladite tubulure d'admission (40).
